(19) Europäisches Patentamt European Patent Office Office européen des brevets

(11) **EP 2 105 813 A2**

(12) **EUROPEAN PATENT APPLICATION**

(43) Date of publication:
**30.09.2009 Bulletin 2009/40**

(51) Int Cl.:
***G05B 19/19*** *(2006.01)*

(21) Application number: **09155887.4**

(22) Date of filing: **23.03.2009**

| (84) Designated Contracting States: **AT BE BG CH CY CZ DE DK EE ES FI FR GB GR HR HU IE IS IT LI LT LU LV MC MK MT NL NO PL PT RO SE SI SK TR** Designated Extension States: **AL BA RS** | (71) Applicant: **ABB Ltd.** **Tallaght, Dublin 24 (IE)** |
| --- | --- |
| | (72) Inventor: **Clouse, Richard** **South Vienna, OH 45369 (US)** |
| (30) Priority: **24.03.2008 US 38891 P** | (74) Representative: **De Santis, Giovanni** **ABB S.p.A.** **Via L. Lama, 33** **20099 Sesto San Giovanni (MI) (IT)** |

(54) **Dynamic set-point servo control**

(57)     A method and system for controlling a scanning system for a paper machine is disclosed. The scanning system includes a first scanner (S1) having a first sensor head (H1) and a second scanner (S2) having a second sensor head (H2) and positioned downstream of the first scanner. Proportional integral derivative control maintains the first and second scanners on their corresponding trajectory arrays. The second scanner tracks the same location of the sheet as the first scanner and the first trajectory array is recalculated at each execution cycle.

Figure 3

## Description

Technical Field

The present invention relates to control systems for the synchronization of sheet measuring sensors.

Background

Continuous sheet producing machines require monitoring of many sheet properties. Some sheet sensors, by their nature, are narrowly focused at a single point. Gathering measurements from such sensors across the entire cross machine direction requires either many individual sensors spaced apart in the cross-machine direction, or a single sensor that is moved back and forth in the cross-machine direction. Of the moving style sensor, the sensor package (head) is often moved by an AC motor controlled by a PI control loop. Using such an arrangement, the head is instructed to scan from one edge of the sheet to the other in a specified time. However, due to the limitations of PI speed control, the scanning time is often missed, taking slightly longer than was requested.

Past algorithms and control methods focused on controlling the head to a target speed. Such a control method is generally acceptable in a single scanner application, because of relatively large error tolerances. However, the positional errors are unacceptable when synchronizing multiple scanners for same-spot scanning. Same-spot scanning attempts to scan the same area of a moving web at various intervals in the machine direction. Thus, accurate and responsive controls are needed to control each sensor to ensure that the same area of the sheet is scanned at each successive downstream scanner.

There is therefore a need in the art for improved cross-machine direction control for same-spot scanning in sheet making machines.

Summary of the Invention

According to one embodiment of the present invention, a method of controlling a scanning system for a paper machine is disclosed. The scanning system includes a first scanner having a first sensor head and a second scanner having a second sensor head and positioned downstream of the first scanner. A trajectory request is received at the first scanner. It is determined whether the trajectory request is feasible given predetermined constraints of the first scanner. A first trajectory array is computed including a plurality of trajectory set-points correlating to the desired path of travel of the first sensor head. A scan is begun at the first scanner using proportional integral derivative control to maintain the first scanning head on the first trajectory array. A scan request is transmitted to the second sensor. A second trajectory array is generated including a plurality of trajectory set-points correlating to the desired path of travel of the second sensor head. A scan is begun at the second scanner using proportional integral derivative control to maintain the second scanning head on the second trajectory array. The second scanner tracks the same location of the sheet as the first scanner and the first trajectory array is recalculated at each execution cycle.

Brief Description of the Drawings

Figure 1 is a chart indicating the speed and position of a simple trajectory.
Figure 2 is a chart indicating the speed and position of a complex trajectory.
Figure 3 is a schematic drawing of a pair of sensors performing same-spot scanning.
Figure 4 is a chart showing linear increase in velocity and accompanying position.
Figure 5 is an exemplary set-point trajectory and actual position comparison.
Figure 6 is an enlarged view of the acceleration portion of the set-point trajectory of Fig. 5.
Figure 7 is an enlarged view of the acceleration phase of a scan wherein the set-point acceleration is set higher than the sensor is capable.
Figure 8 is an exemplary set-point trajectory wherein the set-point velocity is set higher than the sensor is capable of maintaining.
Figure 9 is a target speed versus actual speed graph of a sensor wherein the velocity of the set-point trajectory is set higher than the sensor is capable of maintaining.
Figure 10 is a target distance versus actual distance of a sensor wherein the velocity of the set-point trajectory is set higher than the sensor is capable of maintaining.
Figure 11 is a chart showing a set-point trajectory of a complex trajectory.
Figure 12 is a chart showing a comparison between an upstream and downstream trajectory if the machine speed changes.

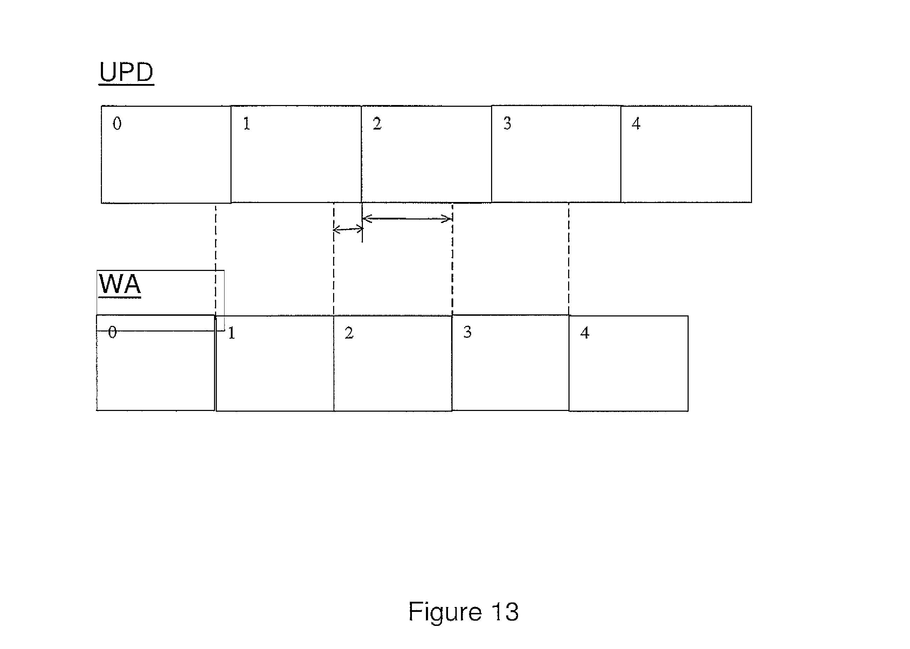

Figure 13 is a graphical illustration of an upstream and downstream set-point array when the machine speed changes.

Detailed Description of the Invention

The present invention is a system and method of controlling sensor head packages used in the manufacture of continuous sheets. Specifically, the present invention is applicable to sensor heads that travel back and forth in the cross-machine direction and measure sheet properties. The invention is particularly applicable for measuring the properties of paper webs. Though the specific type of sensor is not critical to the present invention, exemplary sensors may include moisture content sensors or gauge sensors.

Generally, the present invention includes calculation of position set-points and controlling to those set-points so that a desired head trajectory may be accomplished. Thus, each time a control action is taken (execution cycle) to control the movement of the head, a specific position is expected. The invention further may include the transmission of a first set of trajectory set-points from an upstream sensor to a downstream sensor and the modification of the set-points to account for change in sheet width or machine-direction speed.

As will be hereinafter described, the methods of the present invention may be carried out by software or hardware. The software implementing the control methods of the present invention may be resident in the scanners or may be on a suitable media such as a CD-ROM or flash drive in a form that can be loaded into the scanners for execution.

Alternatively, the software program may be downloaded into the scanner by well known means from the same site where the scanner is located or from another site that is remote from the site where scanner is located. As another alternative, the software program may be installed or loaded into a computing device which is connected to the scanner to send commands to the scanner. Further the software program may include the software needed for one or more of the hereinafter described embodiments, and if it does will allow the user to, in a manner well known to those of ordinary skill in the art, select the software to be executed for the embodiment of the present invention to be implemented by the user.

As can be appreciated by one of ordinary skill in the art, the present invention may take the form of a computer program product on a computer-usable or computer-readable medium having computer-usable program code embodied in the medium. The computer-usable or computer-readable medium may be any medium that can contain, store, communicate, propagate, or transport the program for use by or in connection with the instruction execution system, apparatus, or device and may by way of example but without limitation, be an electronic, magnetic, optical, electromagnetic, infrared, or semiconductor system, apparatus, device, or propagation medium or even be paper or other suitable medium upon which the program is printed. More specific examples (a non-exhaustive list) of the computer-readable medium would include: an electrical connection having one or more wires, a portable computer diskette, a flash drive, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device.

Computer program code for carrying out operations of the present invention may be written in an object oriented programming language such as Java, Smalltalk, C++ or the like, or may also be written in conventional procedural programming languages, such as the "C" programming language. The program code may execute entirely on the scanner, or a separate computer as a stand-alone software package.

For a given sensor, if the desired head trajectory is relatively simple (for example, move the head to position X in 10 seconds), a plurality of interim set-points on the acceleration path, the cruising path, and the deceleration path are computed. The trajectory may be computed at the beginning of a scan operation, or advantageously, in real-time during the scan. Real-time computation of scan trajectory enables the sensor to adjust to changing conditions, such as changing sheet width. The trajectory is computed by accounting for the maximum possible head speed, head acceleration and head deceleration. Using conservative estimates (i.e. less than max speed, max acceleration and max deceleration) for max speed, acceleration and deceleration, enables the head to make up time if the actual head position falls behind a given target point in the trajectory. If the trajectory is more complex, or if synchronization with another sensor head is required (e.g. for same spot scanning as will be discussed hereinafter), individual interim set-points may be input to the control logic.

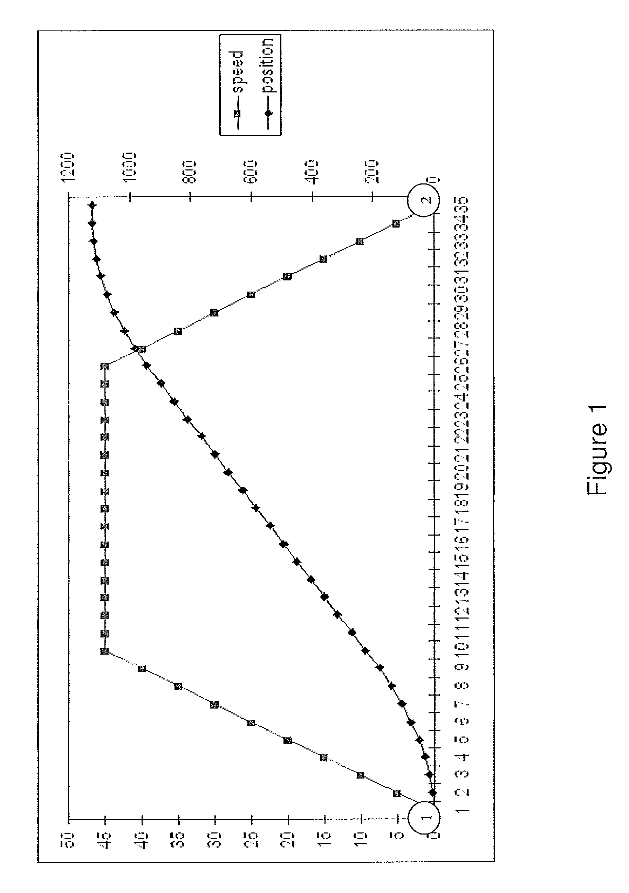

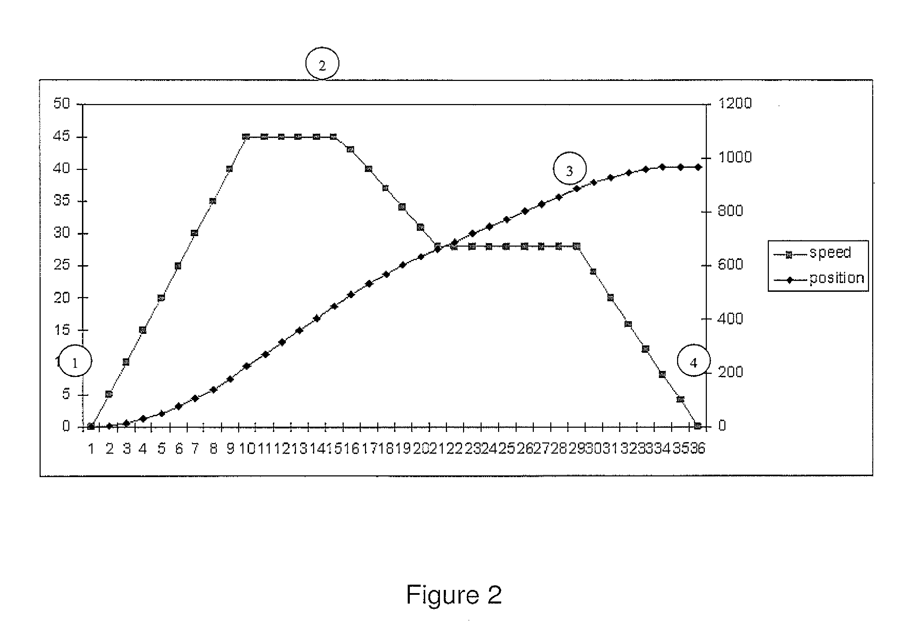

The use of interim set-points in the more complex trajectory is an alternative to the simple trajectory request. With reference to Fig. 1, the trajectory of: "starting at position 1 from a standstill, go to position 2 in 20 seconds using standard acceleration/deceleration and stop" is an example of a simple trajectory. With reference to Fig. 2, an example of a more complex trajectory request may be "starting at position 1, go to position 2 using standard acceleration/deceleration in 6 seconds and continue to cruise, then go to position 3 in 5 seconds and continue to cruise. At position 3, go to position 4 in 5 seconds and stop." This trajectory shows interim set-points before the final position. and will hereinafter be referenced as "complex trajectory 1."

Though the beginning, interim and ending points are input, all remaining set-points of "complex trajectory 1" are calculated by the controlling logic of a scanner. Even more complex trajectories could be created by manually defining all positions for all times in that trajectory. For example, if the execution rate of the controlling logic is 10 times per second, and the trajectory is to be accomplished in 20 seconds, an array of 10 * 20 or 200 points would define the trajectory. Each data point in the array indicates a position. This array could be user-defined array, or could be created and transmitted by another (upstream) scanner.

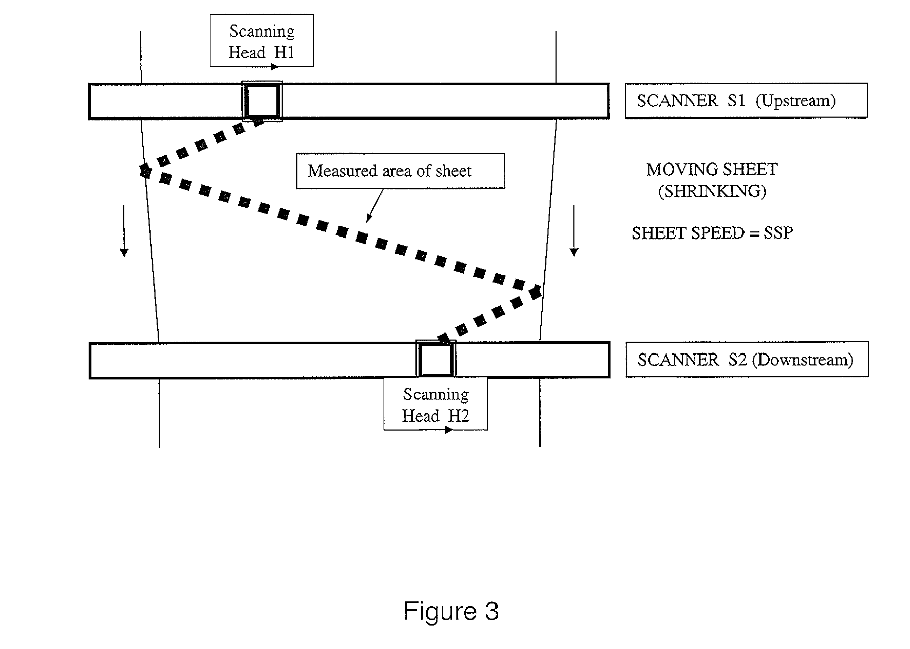

With reference now to Fig. 3, same-spot scanning will be described in greater detail. Sometimes more than one scanner is used on a single paper machine to measure paper qualities at different stages of the paper making process. In these multiple scanner configurations, it may be advantageous to compare measurements made on an upstream scanner to another scanner nearer the end of the process. A same-spot scanning system includes a pair of heads $H_1$ and $H_2$ that are movable in the cross-machine direction on the upstream scanner $S_1$ and downstream scanner $S_2$ respectively. As can be seen, head $H_2$ retraces the same path on the sheet that was traced by the upstream head $H_1$ on scanner $S_1$. Because of sheet shrinkage, the scan width $W_2$ as seen by $H_2$ may be less than the scan width $W_1$ of head $H_1$. However, if the sheet speed remains the same, the cross-machine direction scan time remains the same for both $H_1$ and $H_2$. If, however, the sheet speed increases, the cross-direction speed of $H_2$ must also increase. As will be discussed hereinafter, the change in cross-direction speed may be calculated with the knowledge of the machine direction distance between scanners $S_1$ and $S_2$, wherein the cross-direction speed is a function of machine direction speed.

The quality of same-spot scanning is greatly improved if each scanner $S_1$ and $S_2$ accurately tracks a commanded set-point trajectory. This is achieved, according to the present invention, using a position servo or other position measuring device in each scanner to track the head position with very small errors. At each execution, the head position is compared to a set-point and appropriate control action is taken depending upon the error. The position errors will vary based on the speed of the scan. In particular, early acceleration, early deceleration, and head stopping often exhibit the largest positional error because the control assumes a perfect response to motor commands. The large inertia associated with the sensor-laden heads often ensures less than perfect response to motor commands.

Each scanner (S1 and S2) consists of a head package (H1 and H2) of one or more individual sensors that are moved across a moving sheet. Each scanner includes its own computer to control movement and head positioning. Each scanner is linked to upstream and downstream scanners by a communication network. All scanners are also in communication with a central controlling host computer. The controlling host computer allows the user to control the functions of each scanner as well as request scanning operations such as same-spot scanning. Thus, a user may input a same-spot scan command into the controlling host computer with a requested scan time. The controlling host transmits a scan command to the upstream scanner $S_1$, which begins a scan once it is over the paper and all sensors are prepared to measure. The scanner, using the requested scan time and known sheet which creates an upstream set-point trajectory that indicates the position the head should be at all times of the scan. When the scan begins, a feed-forward gain is used with PID control to minimize the error between where the scanner is and where it should be, according to the pre-computed array of positions. This continues until the scan is completed, and the process is repeated in the opposite direction. In one or more embodiments, the scan trajectory is recalculated at each control action (execution cycle) and is adjusted for changing conditions (i.e. changed sheet width).

For same spot scanning, the starting time, scan time, and scan width of the upstream scanner are communicated from the upstream scanner to the downstream scanner. The downstream scanner uses this information, and the propagation delay time of the sheet between the scanners as well as the scan limits of the downstream scanner, and computes a downstream set-point trajectory. As will be hereinafter discussed, for more complex trajectories, the full upstream set-point trajectory may be transmitted to the downstream sensor, which thereafter modifies the trajectory according to sensed sheet width and machine speed. This allows the downstream scanner to begin a scan over the same spot on the sheet as that scanned by the upstream scanner, and continue scanning over the same spots seen upstream. The downstream set-point trajectory may be slightly different from the trajectory of the upstream scanner (due to shrinkage), but the head will continue to "see" the same section of paper as seen by the upstream scanner. The downstream sensor uses feed-forward and PID to control the head position. The downstream scanner continues to track the upstream scanner in this manner until the user commands the upstream scanner to stop. The user may also command the scanners to run independently.

Prior to controlling and tracking the scanning head, the array of trajectory set-points must be calculated. The values of the set-point array represent cross-direction position. Because the execution rate is known (ex. 4 executions per second) the values of the array also correlate with a known time. Thus a trajectory set-point array includes the location and time for a scanning head. The capabilities (ie. max speed, acceleration, and deceleration) of the sensor system head package must be known to ensure attainable trajectory set-points. This is due to varying head packages that may hold a different number of sensors of varying weight. Thus, even if the driving mechanism of each sensor system is the same, the maximum cross-direction movement capabilities may vary from sensor to sensor. Further, other variables, such as gearing of the motor, motor controller setup, and friction affect the maximum head speed.

As discussed above, each scanner is connected to a controlling host computer via Ethernet or any other communications link. The controlling host computer runs the software that implements the measurement control. At the controlling host, the user may set the parameters, allowing the setting or changing of, among other things, the requested scan time. When a scan time request is made by the controlling host to a scanner, a calculation is performed to see if that request is attainable. That calculation may be performed at the scanner or at the controlling host. If the scanning head, accelerating at maximum and deceleration at maximum, can not reach the final requested position in the requested time, the scan time request is rejected. This calculation is according to the following equation, wherein if the calculation produces a positive number, the trajectory may be possible based on acceleration limitations. It should be appreciated that the MaxHeadAccel and maximum head speed are the "conservative" maximums, and are therefore less than the true maximums.

$$\text{MaxHeadAccel}^2 \ * \ \text{RequestedScanTime}^2 \ - \ 4 \ * \ \text{MaxHeadAccel} \ *$$
$$\text{ScanDistance}$$

(MaxHeadAccel is the smaller of maximum head acceleration or maximum head deceleration.)
Next, it must be determined whether the scan trajectory is also possible based on maximum speed. The following calculations are performed:

$$\text{TempVelocity} = (\text{MaxHeadAccel} * \text{RequestedScanTime} - \text{sqrt}$$
$$(\text{MaxHeadAccel}^2 * \text{TotalTime}^2 - 4 * \text{MaxHeadAccel} * \text{ScanDistance})) \ / \ 2$$

$$\text{TempCruiseTime} = \text{ScanDistance} / \text{TempVelocity} - \text{TempVelocity} /$$
$$\text{MaxHeadAccel}$$

If the TempCruiseTime is positive, and the TempVelocity is less than or equal to the maximum allowable scan head speed, then the requested trajectory is attainable. Otherwise, a new scan time is defined by:

$$\text{CruiseSpeed} = \text{MaxSpeed}$$

$$\text{NewTimeTarget} = (\text{CruiseSpeed} / \text{MaxHeadAccel}) + (\text{ScanDistance} /$$
$$\text{CruiseSpeed})$$

Once attainable scan parameters are determined, the head trajectory is divided into three phases: acceleration, cruise, and deceleration. During operation, all phases are controlled with a PID control which functions to minimize the difference between the target position and the actual position. Additionally, the acceleration phase employs a feed-forward component to boost output while the speed is changing. The feed-forward component is a multiplier of the "max" motor controller output. It is a value from 0 to 1 (typically just less than 1). If it were 1, and were used by itself, it would produce a linear ramp of the output from 0 when the head is at rest to the head's maximum speed. As another example, if the output to the motor controller were 9 volts to produce a MaxSpeed, and the feed-forward value is .8, a linear output value component would be produced during acceleration from 0 (at rest), to 7,2 (9 * .8) volts to produce MaxSpeed. Of course the output produced by this component is also modified by the PID control. The deceleration phase employs the same feed-forward component to cut the output during head slowdown.

When a trajectory request is made, as discussed above, calculations are performed to determine if the trajectory is possible, and if not, what the next best alternate is. Next, the number of steps or set-points to be used in each phase is determined. At that point, the control begins running, with each iteration dynamically (in real-time) computing its next position and also dynamically computing the output to the motor that controls the head, adjusting upwardly or downwardly to attain the requested trajectory. A linear (velocity) run up to the cruise speed is attempted. This is accomplished assuming a constant acceleration (the "MaxHeadAccel"). The head velocity during the acceleration phase increases at each execution period.

For example, assume the acceleration phase is from position 100 to 101.82, at which point the constant velocity phase begins. If the system executes 10 times per second, and the acceleration phase occurs in 14 executions, the time of the acceleration phase is 1.4 seconds.

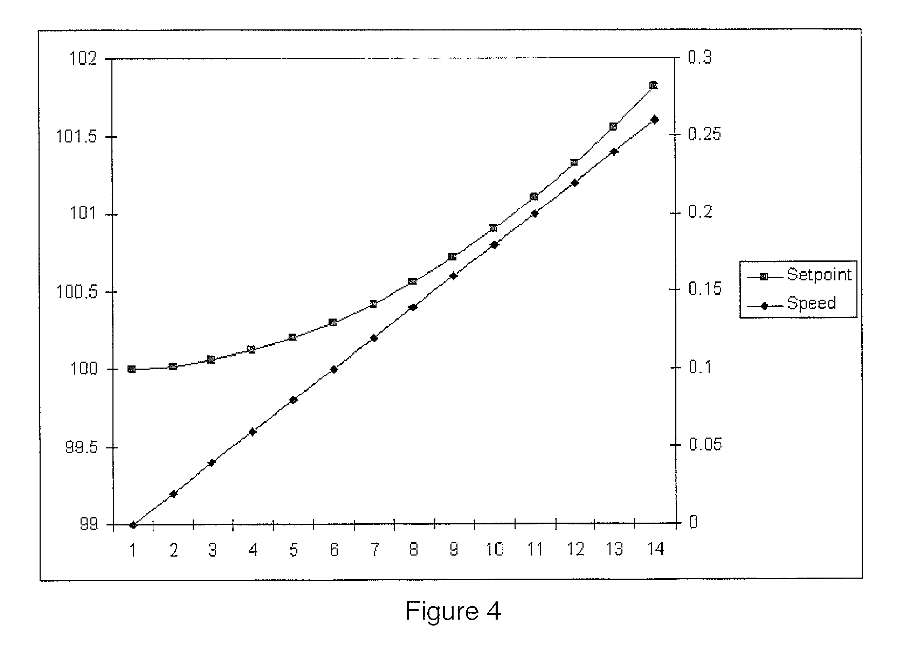

As can be seen, with reference to Fig. 4, the speed increases linearly, equating to a constant acceleration of .02 mm/sec$^2$. The PID is aided during speed changes with the addition of a feed-forward component that pushes the motor output up faster than the PID control loop is capable of. In this manner, the PID control doesn't have to work so hard to "catch up". This also minimizes the error between the target and the actual position. Still, even using the present invention, some lag will occur between the target and the set-point during the first several control iterations of the acceleration phase because of the inertial resistance of the head.

The total number of target positions (set-points) depends on the total time of the requested scan. If the requested scan is for 20 seconds, and the control logic runs at a frequency of 10 times per second, 200 position set-points are spread over the 3 control phases. The acceleration phase and the deceleration phase are determined at the start of the trajectory using the known (conservative) maximum acceleration/deceleration capabilities. The remaining area, between the acceleration and deceleration phases, is set to the cruise phase. The conservative max acceleration/deceleration is found by measurement during a frame tuning operation, when the frame is installed.

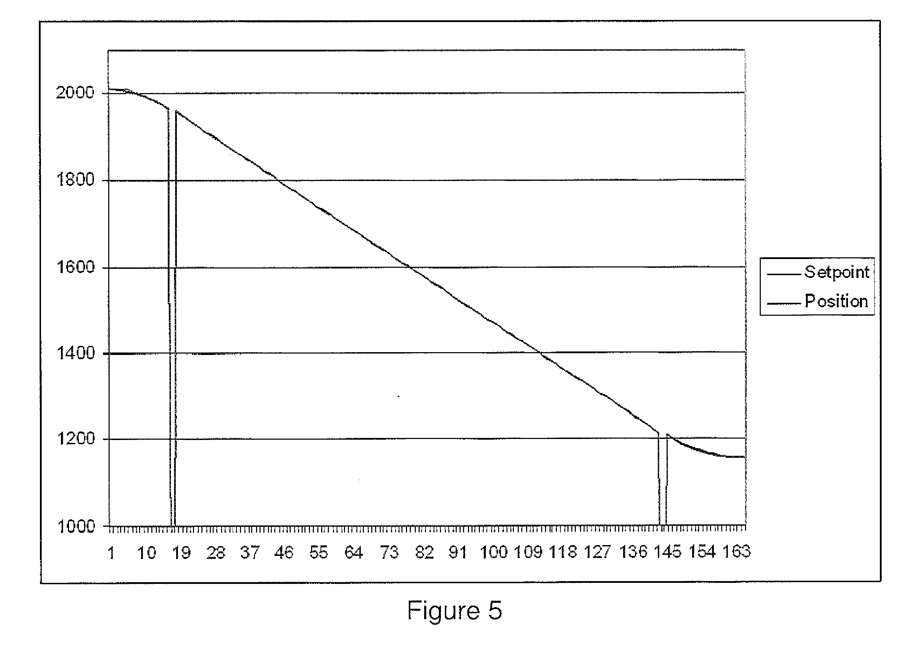

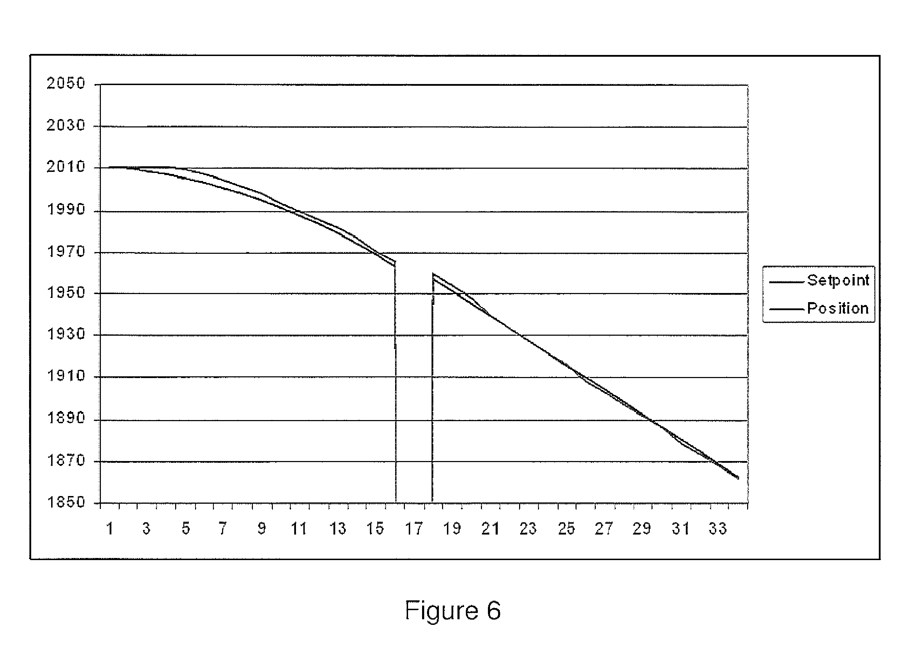

With reference now to Fig. 5, a graph is shown of set-point and position during a scan employing the control method of the present invention. The negative spikes indicate the transition between acceleration and cruise phases and between cruise and deceleration. As shown in Fig. 6, which is an enlarged view of the acceleration phase of Fig. 5, it can be seen that a slight lag is present during acceleration between the set-point and the actual position of the head. However, the true head position catches up and tracks the set-point at the cruise phase.

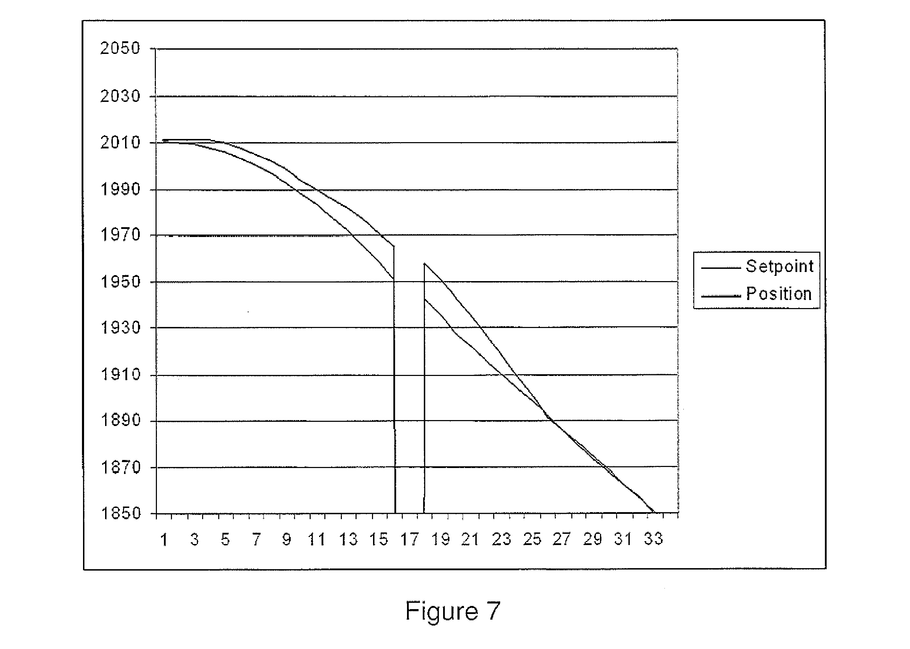

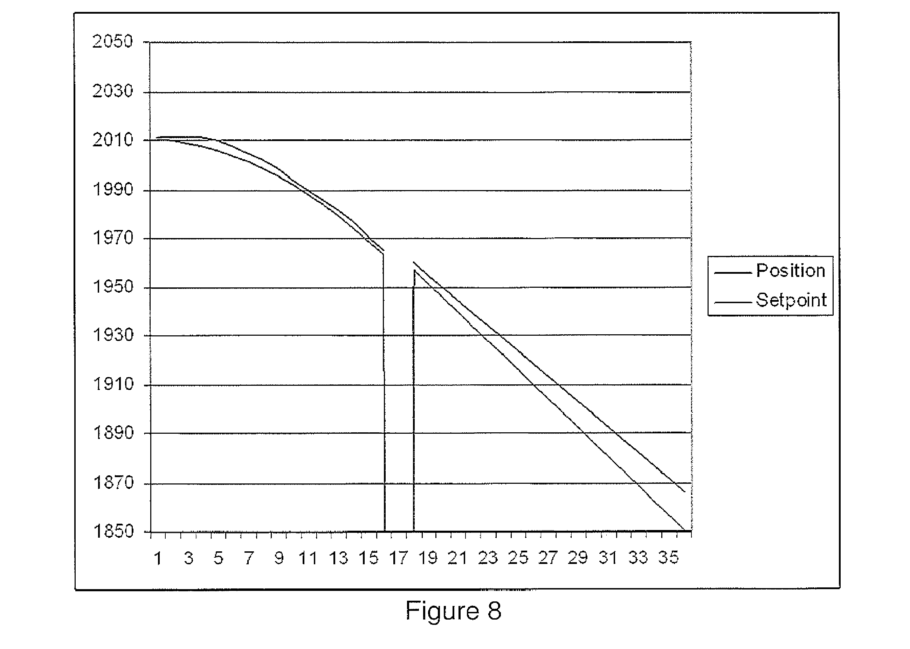

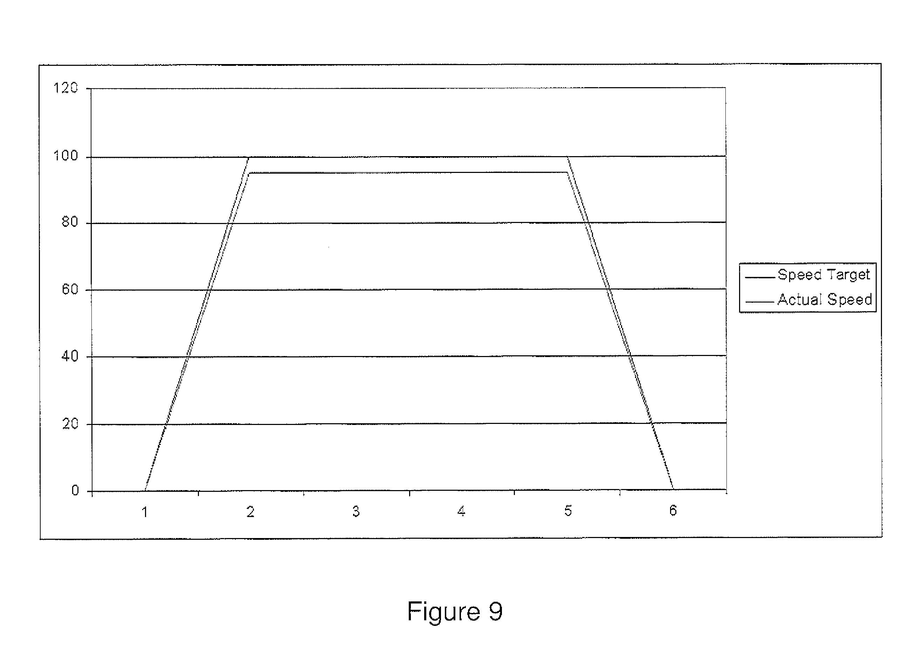

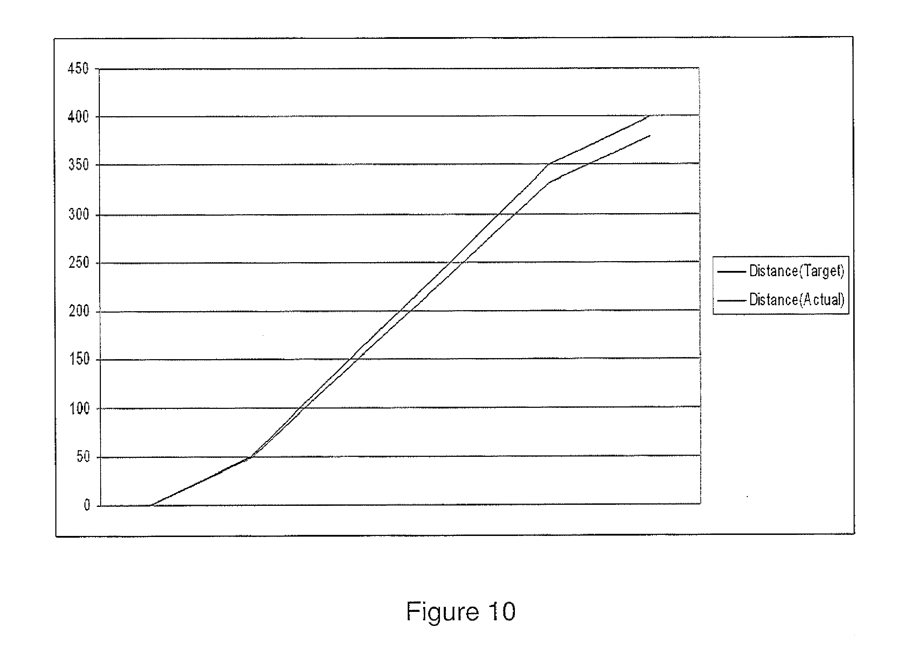

The graph of Fig. 7, displays an actual scan run performed with set-points calculated using a greater acceleration capability than the motor was capable of delivering. As can be seen, the actual head position falls behind the set-point during acceleration and catches up gradually during the cruise phase. If the maximum set-point speed (during cruise) is higher than the frame's capabilities, the head would never catch up with the set-point. In such a situation, the set-point and the actual position continue to diverge throughout the cruise phase, as shown in Figs. 8-10.

Same-spot scanning using multiple scanners requires specific knowledge of where and when the head traveled over a given point on the upstream sheet. This information is conveyed to the downstream scanner(s) in one of two ways. The first method of synchronization (when the trajectory has simple acceleration, cruise, and deceleration components) may be accomplished by transmitting only the significant point data of the upstream trajectory. This data may include:

1. The time and head position when the scan started
2. The time and the head position when the scanner transitioned to cruise phase
3. The time and head position when the scanner transitioned to deceleration phase
4. The time and head position when the scanner got to the end of the scan.

This information is received by the downstream scanner $S_2$ along with the sheet speed input, the known distance between the upstream scanner $S_1$ and the downstream scanner $S_2$ and the sheet width at the downstream scanner. Using these inputs the downstream scanner $S_2$ synchronizes with upstream scanner $S_1$ to scan the same spot on the sheet. Same spot scanning requires the upstream and downstream clocks to be synchronized, which is performed, for example, by sending a timestamp from the upstream sensor via Ethernet communications, then using that new timestamp on the downstream sensor when a digital line from the upstream frame is toggled.

Using the sheet speed input, the downstream scanner determines when the scanned portion of the sheet passes by the scanner. Assuming linear sheet shrinkage, the head positions at the phase change points are mapped from the upstream scanner. For the above describe "simple trajectories," the input from the upstream scanner includes the four points described herein above. For example, the upstream scanner's first data point may indicate a starting position of 1000mm at time zero, the second point may indicate a transition to cruise occurring at position 2000mm at time equals 3 seconds. If the sheet width at the upsteam scanner is 7000mm, and the sheet width at the downsteam scanner is 6900mm, the downstream scanner is mapped to transition to cruise mode at 1000 * (6900 / 7000) or 985.71 mm from the start of the downstream scanner starting position. The downstream starting position is likely more than 1000mm due to the sheet shrinkage. It should be appreciated, however, that though scan distances may change, the time of each respective phase does not change. Scan times only change if the sheet speed changes in which case, scan times are adjusted to compensate for the slower or faster sheet movement.

The sheet widths may be measured using edge detectors on all frames, in this manner the width of the sheet is known at each scan location. For example, assume a 5 meter wide sheet moves at 10 m/sec at the upstream scanner. That scanner executes a scan beginning at time 0 of 20 seconds duration. An example scan may include an acceleration phase ending at one meter, and a deceleration phase ending at 4 meters. Each of those phases may last for two seconds. Assume that the sheet speed remains constant at 10 m/sec throughout the downstream and upstream scan, and that the last scan on the downstream scanner indicated a sheet width of 4.5 meters. The trajectory computed for the downstream scanner is:

The acceleration phase lasts for 2 seconds, but its distance is 1 m * (4.5 m / 5 m), which comes to .9 m.
The cruise to deceleration phase happens at 4m * (4.5 m / 5 m), or 3.6 m.
The end of the scan occurs at 4.5 meters after 20 seconds.
Assuming the same situation as described above except the machine-direction sheet speed slows to 9 m/sec. In this state, it takes longer for the sheet to travel from the upsteam scanner to the downsteam scanner. The downstream scanner tracks the machine-direction speed and adjusts the starting time for downstream sensor. Because the sheet is traveling slower, the scan time must be lengthened proportional to the machine-direction speed to view the same spots on the sheet.

If a trajectory is more complex than the above examples, such as more transition points, the underlying mathematics are the same, but the calculations are performed for more points. If the trajectory gets very complex, a manually input set-point may be input for each execution period. Thus, for an execution rate of 10 times per second, the previous example may send 20 * 10 = 200 sample points containing a head position and a timestamp.

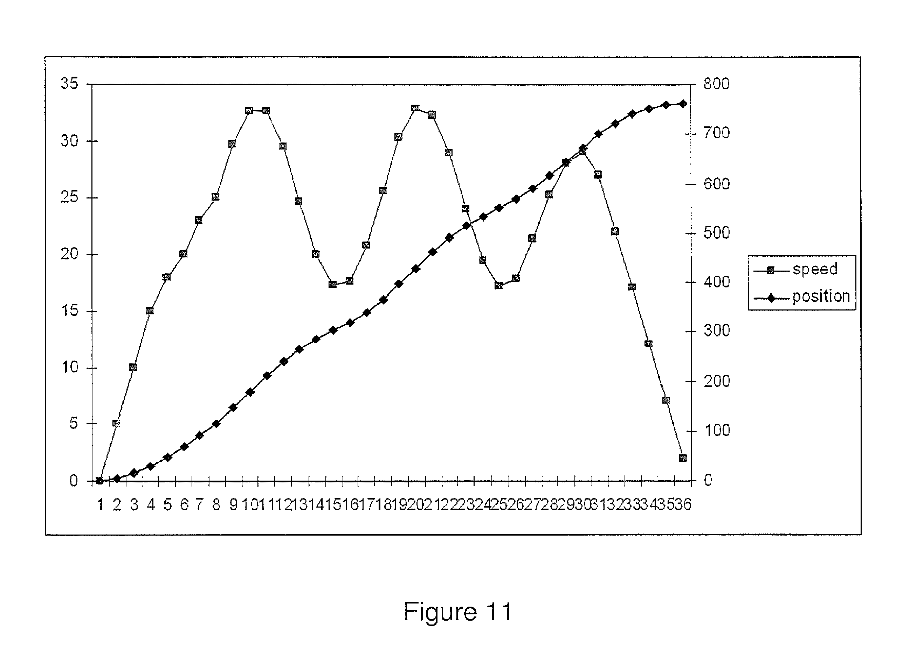

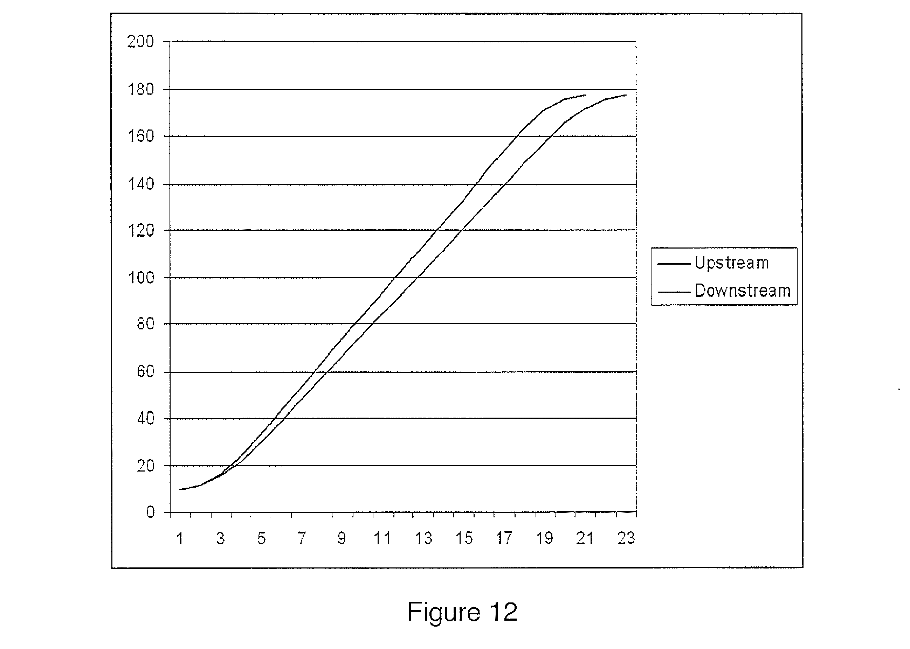

For a simple trajectory mapping a downstream trajectory is performed according to the above calculations. However, when the trajectory is very complex, (for instance, one that is created point by point) the above described method of computing points is not feasible. For example, with reference to Fig. 11, a trajectory is shown having a generally sine wave shape. Mapping this trajectory using a group of mini trajectory pieces is not possible. In such instances, individual points must be mapped because of sheet shrinkage (resulting in less distance between consecutive points), and because the sheet speed at the upstream scanner is different from the downstream scanner, the downstream scanner needs a different amount of time for its scan, and therefore, more or less number of executions. When this situation occurs, the position mapping is combined with weighted averaging to arrive at the downstream array of target points. The graph of Fig. 12 shows the upstream and downstream positions graphed against the number of samples (more sampling equates to more time) which is applicable when the machine-direction speed is slower when the downstream scan begins.

The algorithm that creates the mapping of a smaller number of samples to a larger number of samples follows these steps:

Map the upstream position array (including all positions the upstream scanner traced to complete its trajectory) to the downstream position array focusing on shrinkage. This is done by:

Finding the cross-machine scan distance $D_u$ of the upstream scanner by subtracting the two extreme positions of the position array.
Computing the scan distance $D_d$ of the downstream scanner by calculating the difference between the home and far edges of the sheet from the edge detection during the previous scan. Computing a scale factor $S_{ud}$ wherein $S_{ud} = D_d / D_u$.
Computing an array of position differences UPD[] between all upstream positions, by beginning with the upstream trajectory array and subtracting adjacent points.
Creating an array of downstream position differences DPD[] by multiplying each value in the UPD[] array by $S_{ud}$. Starting with the beginning position of the downstream scanner, add entries from the DPD[] array to the previous position to compute a new position array NP[].

In this manner, the upstream trajectory is mapped to the downstream trajectory. Though the above method is described in reference to highly complex trajectories, this method may also be employed for simple trajectories as well. The mapping is complete, unless a speed change occurs between the upstream and downstream sensor. Though such an occurrence is relatively infrequent, the machine speed may be ramped up and down after a sheet break or when product type (grade) is changed. Also, speed changes may occur slowly after a grade change to tweak the paper machine for maximum production.

The array NP[] may be mapped for machine-direction speed differences between the sheet as it passes through the upstream scanner and the sheet as it passes through the downstream scanner. This is done by:

Computing an array PD[] of position differences between all downstream positions in the NP[] array.

Computing a time delay factor TDF by dividing the machine-direction sheet speed at the upstream scanner by the machine-direction sheet speed at the downstream scanner. Multiplying the TDF by the number of executions used by the upstream scanner for the cross-direction scan. E.g. if 1000 executions were used for the upstream scan, and if TDF were a value of 1.1 (slower sheet speed downstream), then 1000 * 1.1 = 1100. This serves as the number of executions (i.e. array values) to be used for the downstream data arrays (DDP[]).

Creating a work array WAD the same size as DDP[]. The values in WA[] are equal to the array index divided by TDF. For example, if TDF is 1.1, WA[0] = 0 / TDF, or 0. For WA [1] = 1 / TDF, or .909. For WA[2] = 2 / TDF, or 1.818. This series of numbers reflect the mapping of downstream indices to upstream indices. Thus, a value at WA[2] of 1.818 indicates that this array entry maps back to less than the data that appeared in UPD[2].

What it actually will be is .818 of UPD[2] plus .091 <arrived at by: .818 - .909 = -.091 ; remember that .909 is TDF> times UPD[1].

So each downstream array entry will contain .909 of the amount of data in each upsteam array location. But using this WAI array, we can determine which parts of the two upstream array entries will be used to form the downstream array.

Create 2 more arrays of the same size as DDp[]. CWf[] and CPf[].

CWf[] is the whole number part of WA[]. CPf[] is the remainder after CWf[] is subtracted from WA[].

Two more arrays are created (same size as DDp[] again). These are WHf[], and PRf[]. WHf has the same values as CPf[]. PRf[] equeals TDf minus the corresponding value in the CPf[] array.

The first value of DDp[] is seeded with the starting location of the downstream scanner.

The remaining values of DDp[] are formed by adding the previous value of DDp[] to WHf[] * Pd[CWf[]] + PRf[] * Pd[CWf[] - 1].

This calculation creates the same trajectory shape as the upstream scanner, but adjusts the cross-machine travel time according to the change in speed.

When a trajectory of the upstream scanner begins, the feed-forward component of output calculations ramps the output from 0 to the output required to move at the computed cruise speed. At each control execution time, the difference between the current position and the requested position in the trajectory array is analyzed. Also, optionally, at each control execution time, the trajectory set-points are recalculated to account for any changing conditions, such as a change in sheet width. Proportional, Integral, and Derivative control is applied to this difference to achieve a difference of 0. If the current position lags the target position, the output is increased above what is being applied by feed-forward. If the current position is ahead of the target, the output is decremented. This continues until the acceleration phase is completed, and thereafter, the current output value is maintained using the PID to minimize the position error. When the trajectory gets to the deceleration phase, the feed-forward component predicts how fast the output must be decreased to stop the scan head at the end of the scan. PID control again is employed during the deceleration phase to minimize the error. In this manner, the scanner always attempts to achieve the correct position at the correct time to maintain the chosen trajectory.

It is to be understood that the description of the preferred embodiment(s) is (are) intended to be only illustrative, rather than exhaustive, of the present invention. Those of ordinary skill will be able to make certain additions, deletions, and/or modifications to the embodiment(s) of the disclosed subject matter without departing from the spirit of the invention or its scope, as defined by the appended claims.

**Claims**

1. A method of controlling a scanning system for a paper making machine, the scanning system including a first scanner (S1) having a first sensor head (H1) for sensing a quality of the paper and a second scanner (S2) having a second sensor head (H2) for sensing a quality of the paper and positioned downstream of the first scanner (S1), **characterized in that** it comprises:

    receiving a trajectory request at the first scanner (S1);
    determining whether the trajectory request is feasible given predetermined constraints of the first scanner (S1);
    computing a first trajectory array including a plurality of trajectory set-points correlating to the desired path of travel of the first sensor head (H1);
    beginning a scan at the first scanner (S1) using proportional integral derivative control to maintain the first sensor head (H1) on the first trajectory array;
    transmitting a scan request to the second scanner (S2);
    generating a second trajectory array including a plurality of trajectory set-points correlating to the desired path of travel of the second sensor head (H2); and
    beginning a scan at the second scanner (S2) using proportional integral derivative control to maintain the second scanning head (H2) on the second trajectory array, wherein the second scanner (S2) tracks the same location of the sheet as the first scanner (S1) and wherein the first trajectory array is recalculated at each execution cycle.

2. The method of claim 1 wherein the scan request to the second scanner (S2) includes the time and head position of the first head (H1) when the scan started, the time and the first sensor head (H1) position when the first scanner (S1) transitioned to a cruise phase, the time and first sensor head (H1) position when the first scanner (S1) transitioned to deceleration phase, the time and first sensor head (H1) position when the first scanner (S1) ended the scan, and a starting time, scan time, and the scan width of the first sensor head (H1).

3. The method of claim 1 wherein the scan request to the second scanner (S2) includes the starting time and the first trajectory array.

4. The method of claim 1 wherein the trajectory request to the first scanner (S1) includes a starting time and a scan time.

5. The method of claim 1 wherein the trajectory request to the first scanner (S1) includes a starting time and a plurality of interim trajectory points with corresponding scan time to reach the plurality of interim trajectory points.

6. The method of claim 1 further comprising continuously monitoring the width of the paper at the first scanner (S1) and continuously adjusting the first trajectory array in response to the paper width.

7. The method of claim 1 wherein determining whether the trajectory request is feasible given predetermined constraints of the first scanner (S1) includes multiplying the maximum head acceleration squared times the requested scan time squared and subtracting four times the maximum head acceleration times the scan distance, and if the result is non-negative, approving the trajectory request.

8. The method of claim 7 wherein determining whether the trajectory request is feasible given predetermined constraints of the first scanner (S1) includes calculating the following:

$$TempVelocity = (MaxHeadAccel * RequestedScanTime - sqrt$$
$$(MaxHeadAccel^2 * TotalTime^2 - 4 * MaxHeadAccel * ScanDistance)) / 2$$

$$TempCruiseTime = ScanDistance / TempVelocity - TempVelocity /$$
$$MaxHeadAccel$$

wherein if the TempCruiseTime is positive, and the TempVelocity is less than or equal to the maximum allowable scan head speed, approving the trajectory request.

9. The method according to claim 8 wherein if the trajectory request is not approved, calculating a new scan time according to the following equation:

$$CruiseSpeed = MaxSpeed$$

$$New\ Scan\ Time = (CruiseSpeed / MaxHeadAccel) + (ScanDistance /$$
$$CruiseSpeed)$$

wherein the MaxSpeed is a value proportionally less than the true maximum speed of the first head (H1).

10. The method of claim 1 wherein generating a second trajectory array includes finding a cross-machine scan distance $D_u$ of the first scanner (S1) by subtracting the two extreme positions of the first trajectory array, determining the scan distance $D_d$ of the second scanner (S2) from an edge detector during a previous scan, computing a scale factor $S_{ud}$ wherein $S_{ud} = D_d / D_u$, computing an array of position differences UPD[] between all positions in the first trajectory array, creating an array of second scanner (S2) position differences DPD[] by multiplying each value in the UPD[] array by $S_{ud}$, and adding entries from the DPD[] array to the previous position, starting with the beginning position of the second scanner (S2), to compute the second trajectory array.

11. A scanning system for a paper making machine, **characterized in that** it comprises:

    a first scanner (S1) having a first sensor head (H1) for measuring a characteristic of the paper, said first scanner (S1) adapted to receive a trajectory request for said first sensor head (H1), determine if said trajectory request for said first scanner (S1) is feasible given predetermined constraints of said first scanner (S1), compute a first trajectory array including a plurality of trajectory set-points correlating to the desired path of travel of said first sensor head (H1), initiate a scan using proportional integral derivative control to maintain the first sensor head (H1) on the first trajectory array and transmit a scan request,
    a second scanner (S2) having a second sensor head (H2) for measuring a characteristic of the paper and positioned downstream of the first scanner (S1), said second scanner (S2) adapted to receive said scan request, generate a second trajectory array including a plurality of trajectory set-points correlating to the desired path of travel of said second sensor head (H2) and initiate a scan using proportional integral derivative control to maintain said second scanning head (H2) on said second trajectory array, wherein said second scanner (S2) tracks the same location of the sheet as said first scanner (S1) and wherein the first trajectory array is recalculated at each execution cycle.

12. The system of claim 11 wherein said scan request includes the time and head position of the first head (H1) when the scan started, the time and the first head (H1) position when the first scanner (S1) transitioned to a cruise phase, the time and first head (H1) position when the first scanner (S1) transitioned to deceleration phase, the time and first head (H1) position when the first scanner (S1) ended the scan, and a starting time, scan time, and the scan width of said first sensor head (H1).

13. The system of claim 11 wherein the scan request to said second scanner (S2) includes the starting time and the first trajectory array.

14. The system of claim 11 wherein the trajectory request to the first scanner (S1) includes a starting time and a scan time.

15. The system of claim 11 wherein the trajectory request to the first scanner (S1) includes a starting time and a plurality of interim trajectory points with corresponding scan time to reach the plurality of interim trajectory points.

16. The system of claim 11 wherein said first scanner (S1) is further adapted to continuously monitor the width of the paper at the first scanner (S1) and continuously adjust the first trajectory array in response to the paper width.

Figure 1

Figure 2

SCANNER S1 (Upstream)

MOVING SHEET (SHRINKING)

SHEET SPEED = SSP

SCANNER S2 (Downstream)

Scanning Head H1

Measured area of sheet

Scanning Head H2

Figure 3

Figure 4

EP 2 105 813 A2

Figure 5

Figure 6

Figure 7

Figure 8

Figure 9

Figure 10

Figure 11

Figure 12

EP 2 105 813 A2

Figure 13

EP 2 105 813 A2